# FASCICULE DE BREVET EUROPEEN

(11) **EP 3 696 396 B1**
(45) Date de publication et mention de la délivrance du brevet: **22.05.2024**
(21) Numéro de dépôt: 20156578.5
(22) Date de dépôt: 11.02.2020
(51) Int. Cl.: F02K 1/60, F02K 1/72, F02K 1/76

(54) **VERROU ACTIF À ENTRAVES POUR INVERSEUR DE POUSSÉE D'UNE NACELLE D´AÉRONEF**
AKTIVES SCHLOSS MIT HEMMNISSEN FÜR SCHUBUMKEHRSYSTEM EINER LUFTFAHRZEUGGONDEL
ACTIVE LOCK WITH LEVERS FOR THRUST REVERSER OF AN AIRCRAFT NACELLE

(30) Priorité: 14.02.2019 FR 1901499
(43) Date de publication de la demande: 19.08.2020
(73) Titulaire: Safran Nacelles, 76700 Gonfreville-l'Orcher (FR)
(72) Inventeur: CARUEL, Pierre, 77550 MOISSY CRAMAYEL (FR); DESCAMPS, Alexandre, 77550 MOISSY CRAMAYEL (FR)
(74) Mandataire: Germain Maureau

(56) Documents cités:
- US-A- 5 826 823
- US-A1- 2014 131 515
- US-A1- 2018 202 390

## Description

La présente invention concerne un système de verrouillage actif en position fermée pour inverseur de poussée d'une nacelle d'aéronef.

Afin de raccourcir la distance de freinage d'un aéronef équipé de turboréacteurs chacun entouré par une nacelle assurant un guidage d'un flux de gaz généré par le turboréacteur, il est connu d'équiper l'aéronef d'un inverseur de poussée.

Une nacelle présente généralement une structure comprenant une entrée d'air en amont du moteur, une section médiane destinée à entourer une soufflante ou les compresseurs du turboréacteur et son carter, une section aval pouvant abriter des moyens d'inversion de poussée et destinée à entourer la chambre de combustion du turbomoteur, et est généralement terminée par une tuyère d'éjection dont la sortie est située en aval du turboréacteur.

En outre, une nacelle comprend usuellement une structure externe comprenant l'entrée d'air, la section médiane et la section aval, et une structure interne fixe, dite Inner Fixed Structure (IFS), concentrique de la section aval, entourant le coeur du turboréacteur en arrière de la soufflante. Ces structures externe et interne définissent un canal annulaire d'écoulement, encore appelé veine secondaire, visant à canaliser un flux d'air froid, dit secondaire, qui circule à l'extérieur du turboréacteur.

L'inverseur de poussée comprend des éléments mobiles d'inversion de poussée, généralement deux éléments mobiles d'inversion de poussée, portés par la nacelle pour se déplacer entre une position de fermeture (jet direct) dans laquelle l'inverseur de poussée est inactif, et une position d'ouverture (jet inversé) dans laquelle l'inverseur de poussée est actif, c'est-à-dire qu'il renvoie au moins une partie du flux de gaz généré par le turboréacteur dans la direction inverse au flux guidé par la nacelle.

Dans la position de jet inversé, l'inverseur de poussée renvoie au moins une partie du flux de gaz généré par le turboréacteur dans la direction inverse au flux guidé par la nacelle.

Dans un type d'inversion de poussée, les éléments mobiles d'inversion sont des portes. Il est connu de prévoir un système de verrouillage assurant le verrouillage des portes en position de jet direct, afin de supprimer tout risque d'ouverture intempestive des portes.

Usuellement, les systèmes de verrouillages comportent des verrous sous forme de crochets, et des ressorts, les ressorts exerçant une force contre les crochets afin de les mettre en position de verrouillage.

Les crochets sont donc en position de verrouillage lorsque les portes sont en position de jet inversé.

Lorsque les portes passent en position de jet direct, les ressorts autorisent les crochets à laisser passer les portes pour les verrouiller. Les documents US2018/202390A1, US2014/131515A1 et US5826823A divulguent des systèmes de verrouillage pour inverseurs de poussée selon l'art antérieur.

Un but de la présente invention est de fournir un système de verrouillage actif agencé pour assister la fermeture des portes en appliquant en fin de course un effort de fermeture sur les portes, et pour permettre le verrouillage des portes en position de jet direct en s'affranchissant de capteurs de position des portes pour déclencher l'application de cet effort.

A cet effet, la présente invention propose un système de verrouillage actif d'un élément mobile pour inverseur de poussée d'une nacelle d'aéronef selon la revendication 1.

Dans la suite de la description, par « moyen de verrouillage », on entendra « moyen de verrouillage actif ».

La commande d'actionnement du moyen de verrouillage est configurée pour commander à la fois un déplacement de l'actionneur du moyen de verrouillage actif et un déplacement de l'élément mobile. Plus particulièrement, la commande d'actionnement du moyen de verrouillage est configurée pour commander à la fois le la fermeture de l'élément mobile et le verrouillage du moyen de verrouillage.

Le moyen de bocage du moyen de verrouillage actif est configuré pour bloquer le moyen de verrouillage en position déverrouillée lorsque la commande d'actionnement du moyen de verrouillage commande la fermeture de l'élément mobile et le verrouillage du moyen de verrouillage.

Le dispositif de déplacement du moyen de blocage du moyen de verrouillage est configuré pour déplacer le moyen de blocage en position de déblocage lorsque l'élément mobile est à une position prédéterminées.

Le dispositif de déplacement du moyen de blocage du moyen de verrouillage est configuré pour être mécaniquement lié à l'élément mobile.

Ainsi, le déblocage du moyen de verrouillage en position de verrouillage est commandé passivement par la position de l'élément mobile.

Ainsi, le moyen de verrouillage ne peut verrouiller l'élément mobile que lorsque l'élément mobile est à une position prédéterminée, bien que le verrouillage ait été actionné lors de la commande en fermeture de l'élément mobile.

En outre, le système de verrouillage actif permet d'assister la fermeture d'éléments mobiles trop souples, ou d'éléments mobiles comportant un actionneur de fermeture trop faible ou disposé trop loin dudit système de verrouillage.

Selon une caractéristique, le moyen de verrouillage comporte au moins un crochet. Selon une caractéristique, l'actionneur du moyen de verrouillage est un vérin.

Selon une caractéristique, la commande d'actionnement du moyen de verrouillage est une commande hydraulique et/ou électrique.

Selon une caractéristique, le moyen de blocage comporte au moins un élément solidaire du moyen de verrouillage.

Selon l'invention, le moyen de blocage comporte deux bras articulés entre eux, un premier bras étant relié de manière fixe au moyen de verrouillage et l'autre bras étant destiné à être relié de manière fixe à la structure fixe.

Selon une caractéristique, une butée fixe est destinée à être disposée sur la structure fixe, de sorte à limiter le mouvement du bras relié à la structure fixe au-delà d'un certain angle pour assurer la fonction de blocage.

Selon une caractéristique, le moyen de blocage est passif. Ainsi, le déblocage est commandé passivement par la position de l'élément mobile.

Selon une caractéristique, le dispositif de déplacement du moyen de blocage est un organe coulissant destiné à être relié à l'élément mobile, conçu pour coulisser lors de la fermeture de l'élément mobile en direction du moyen de blocage de façon à le déplacer en position de déblocage lorsque l'élément mobile est dans une position prédéterminée.

L'actionneur du moyen de déblocage est donc passif. Le déblocage est commandé passivement par la position de l'élément mobile.

Selon cette caractéristique, un ressort de blocage est destiné à exercer une force contre le moyen de blocage dans la direction opposée au déplacement du dispositif de déplacement du moyen de blocage lors de la fermeture de l'élément mobile, ledit ressort étant conçu pour être comprimé par le moyen de blocage lors du déplacement du dispositif de déplacement lors de la fermeture de l'élément mobile.

Ainsi, le moyen de blocage est en position de blocage lorsque l'élément mobile est en position de jet inversé, le dispositif de déplacement du moyen de blocage étant alors éloigné du moyen de blocage.

L'actionneur du moyen de verrouillage est conçu pour actionner le verrouillage lorsque le moyen de blocage est en position de déblocage.

L'élément mobile peut être une porte pivotante ou un capot translatant.

L'invention concerne également un système de fermeture d'une paire de portes pour inverseur de poussée d'une nacelle d'aéronef, les portes étant diamétralement opposées et montées pivotantes entre une position de jet direct, dans laquelle elles assurent la continuité aérodynamique de la nacelle, et une position de jet inversé dans laquelle elles ouvrent au moins un passage dans la nacelle, le système de fermeture comprenant :
- un actionneur de fermeture des portes comportant deux premières bielles, chaque première bielle étant reliée à un premier bord latéral de chaque porte, ledit actionneur étant agencé pour manoeuvrer chaque porte au moins vers la position de jet direct,
- deux organes coulissants portant chacun une deuxième bielle reliée au bord latéral opposé au premier bord latéral de chaque porte, lesdites bielles étant agencées pour être entrainées par les portes lorsque l'actionneur de fermeture manoeuvre les portes vers la position de jet direct, de façon à déplacer les organes coulissants, et
- un système de verrouillage des portes tel que décrit précédemment.

Selon cette caractéristique, les organes coulissants sont les dispositifs de déplacement du moyen de blocage du système de verrouillage.

Selon une caractéristique, le système de fermeture d'une paire de portes comporte un dispositif de détection de rupture d'une bielle.

Ainsi, le système de fermeture d'une paire de portes permet de détecter des ruptures de bielles d'inverseurs de poussée à portes après un cycle de fonctionnement, c'est à dire après un cycle d'ouverture et de fermeture des portes.

Les portes peuvent être identiques ou différentes.

Selon d'autres caractéristiques de l'invention, le système de fermeture d'une paire de portes comporte l'une ou plusieurs des caractéristiques optionnelles suivantes considérées seules ou selon toutes les combinaisons possibles :
- l'actionneur de fermeture est agencé pour manoeuvrer les portes vers la position de jet direct et vers la position de jet inversé, on parle alors de vérin double effet ;
- l'actionneur de fermeture est agencé pour manoeuvrer les portes vers la position de jet direct, on parle alors de vérin simple effet ;
- l'actionneur de fermeture est agencé pour manoeuvrer les portes vers la position de jet direct, et le système de fermeture comporte un actionneur d'ouverture agencé pour manoeuvrer les portes vers la position de jet inversé, on parle alors de vérins simple effet pour l'actionneur de fermeture et l'actionneur d'ouverture,
- une commande d'actionnement de l'actionneur de fermeture, électrique et/ou hydraulique, permet de commander la fermeture des portes,
- la commande d'actionnement de l'actionneur de fermeture est avantageusement identique à la commande d'actionnement du moyen de verrouillage.

L'invention concerne en outre un inverseur de poussée d'une nacelle d'aéronef, l'inverseur de poussée étant du type comportant au moins un élément mobile monté pivotant ou translatant entre une position de jet direct, dans laquelle il assure la continuité aérodynamique de la nacelle, et une position de jet inversé, dans laquelle il ouvre au moins un passage dans la nacelle, caractérisé en ce que l'inverseur de poussée comprend au moins un système de verrouillage actif tel que décrit précédemment.

Selon une caractéristique, l'inverseur de poussée comprend au moins un élément mobile sous forme de capot translatant, et le système de verrouillage actif comprend :
- un moyen de verrouillage actif du capot translatant, mobile entre une position de verrouillage et une position de déverrouillage,
- un actionneur du moyen de verrouillage commandé par une commande de verrouillage,
- un moyen de blocage du moyen de verrouillage en position déverrouillée, mobile entre une position de blocage et une position de déblocage, et
- Un dispositif de déplacement du moyen de blocage.

En variante, l'inverseur de poussée comprend deux éléments mobiles sous forme de portes pivotantes diamétralement opposées, et le système de verrouillage actif comprend :
- un moyen de verrouillage actif de chaque porte pivotante, mobile entre une position de verrouillage et une position de déverrouillage,
- un actionneur des moyens de verrouillage commandé par une commande de verrouillage,
- un moyen de blocage de chaque moyen de verrouillage en position déverrouillée, mobile entre une position de blocage et une position de déblocage,
- Un dispositif de déplacement de chaque moyen de blocage.

Selon cette variante, l'inverseur de poussée comprend un système de fermeture des portes pivotantes comprenant :
- un actionneur de fermeture des portes comportant deux premières bielles, chaque première bielle étant reliée à un premier bord latéral de chaque porte, ledit actionneur étant agencé pour manoeuvrer chaque porte au moins vers la position de jet direct,
- deux organes coulissants portant chacun une deuxième bielle reliée au bord latéral opposé au premier bord latéral de chaque porte, lesdites bielles étant agencées pour être entrainées par les portes lorsque l'actionneur de fermeture manoeuvre les portes vers la position de jet direct, de façon à déplacer les organes coulissants, et lesdits organes coulissants formant les dispositifs de déplacement de chaque moyen de blocage.

Selon cette caractéristique, le système de fermeture comporte un dispositif de détection de rupture d'une bielle.

D'autres caractéristiques et avantages de la présente invention apparaîtront à la lecture de la description qui va suivre et à l'examen des figures annexées dans lesquelles :
[Fig. 1] est une vue schématique d'un système de verrouillage actif selon l'invention, en position de déverrouillage bloqué de portes en position ouverte ;
[Fig. 2] est une vue schématique du système de verrouillage actif selon l'invention, en position de déverrouillage débloqué de portes en cours de fermeture ;
[Fig. 3] est une vue schématique du système de verrouillage actif selon l'invention, en position de verrouillage actif de portes en cours de fermeture ;
[Fig. 4] est une vue schématique du système de verrouillage actif selon l'invention, en position de verrouillage débloqué de portes en position fermée ;
[Fig. 5] est une vue schématique du système de verrouillage actif selon l'invention, en position de verrouillage débloqué de portes en position sur-escamotée ;
[Fig. 6] est une vue schématique du système de verrouillage actif selon l'invention, en position de verrouillage bloqué de portes en position fermée ;
[Fig. 7] est une vue schématique en perspective d'une partie d'une section aval d'une nacelle comportant un inverseur de poussée à porte dont les portes sont en position de jet direct, montrant un système de verrouillage actif selon l'invention ;
[Fig. 8] est une vue schématique de côté de l'inverseur de poussée à porte de la figure 1, montrant un actionneur de fermeture des portes, les portes étant en position de jet inversé ;
[Fig. 9] est une vue schématique d'un système de verrouillage actif selon l'invention, en position de déverrouillage bloqué d'un capot translatant en position ouverte ;
[Fig. 10] est une vue schématique du système de verrouillage actif selon l'invention, en position de déverrouillage débloqué d'un capot translatant en cours de fermeture ;
[Fig. 11] est une vue schématique du système de verrouillage actif selon l'invention, en position de verrouillage actif d'un capot translatant en cours de fermeture ;
[Fig. 12] est une vue schématique du système de verrouillage actif selon l'invention, en position de verrouillage débloqué d'un capot translatant en position fermée ;
[Fig. 13] est une vue schématique du système de verrouillage actif selon l'invention, en position de verrouillage débloqué d'un capot translatant en position sur-escamotée ;
[Fig. 14] est une vue schématique du système de verrouillage actif selon l'invention, en position de verrouillage bloqué d'un capot translatant en position fermée ;
[Fig. 15] est une vue schématique de côté de l'inverseur de poussée à porte de la figure 8, vu depuis l'autre côté, montrant un système de fermeture de portes selon l'invention.

Dans la description qui va suivre et dans les revendications, des composants identiques, similaires ou analogues seront désignés par les mêmes chiffres de référence et on emploiera les termes « amont », « aval », « horizontal », « vertical », « supérieur », « inférieur », « intérieur », « extérieur » etc. à titre non limitatif et en référence aux dessins afin de faciliter la description.

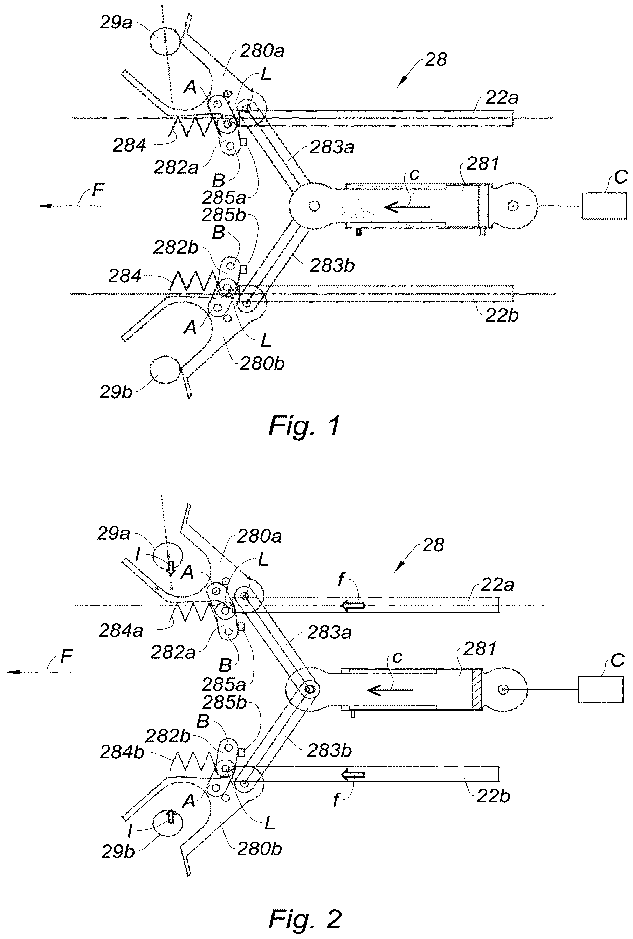

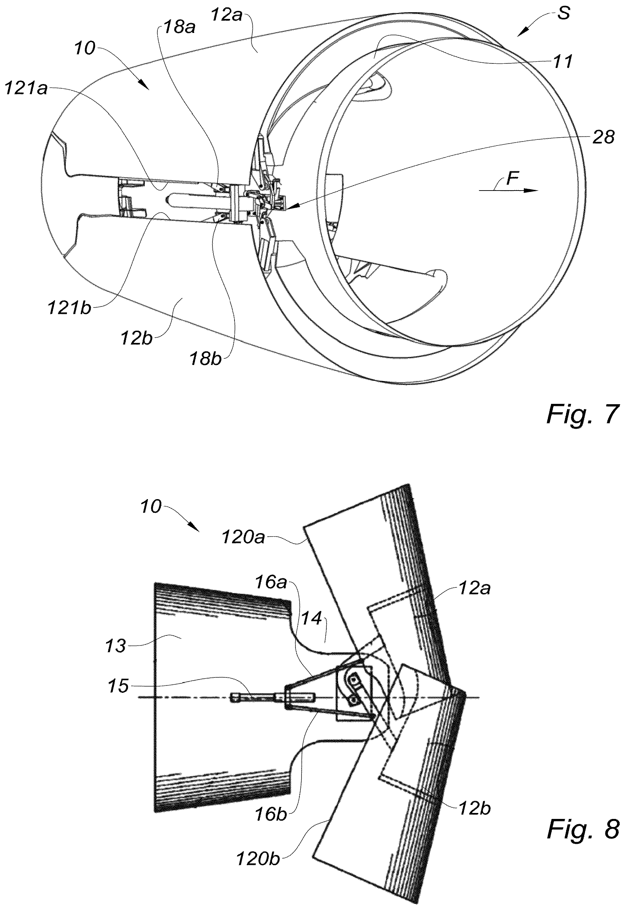

La figure 1 représente un système de verrouillage actif 28 en position de déverrouillage bloqué de portes en position ouverte (figure 8), comportant :
- deux moyens de verrouillage, respectivement supérieur 280a et inférieur 280b, sous forme de crochets,
- un actionneur 281 des moyens de verrouillage 280a, 280b, sous forme de vérin,
- deux moyens de blocage, respectivement supérieur 282a et inférieur 282b, des moyens de verrouillage 280a, 280b, sous forme d'entraves, et
- deux dispositifs de déplacement, respectivement supérieur 22a et inférieur 22b, des moyens de blocage, respectivement supérieur 282a et inférieur 282b, sous forme d'organes coulissants.

Les crochets 280a, 280b, sont agencés pour laisser passer un galet, respectivement supérieur 29a et inférieur 29b, solidaire d'une porte, respectivement supérieure 12a et inférieure 12b (figures 7 et 8), de façon à permettre l'ouverture et la fermeture de ladite porte.

Ils sont en position de déverrouillage.

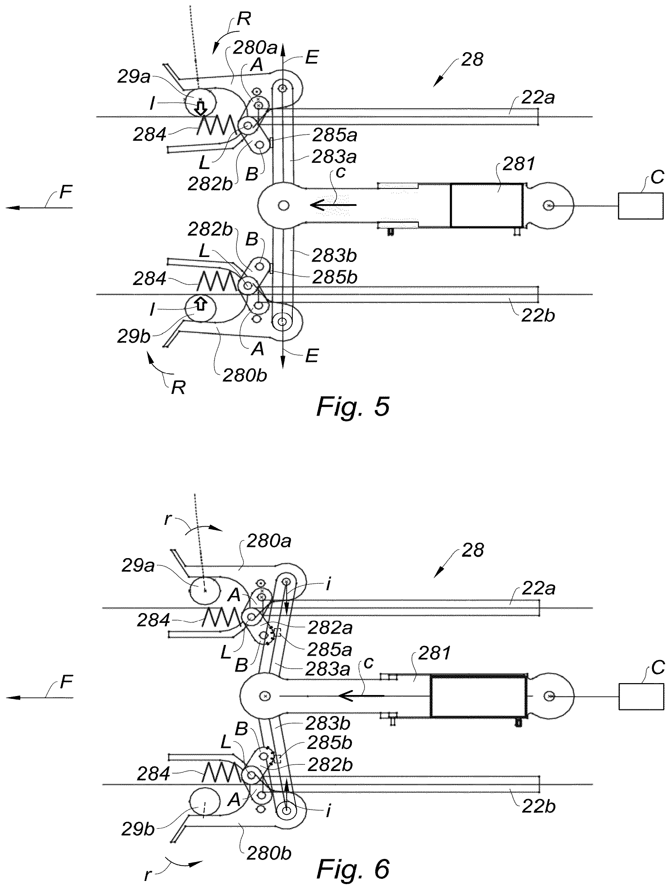

Les crochets 280a, 280b, sont montés pivotants entre cette position de déverrouillage et une position de verrouillage (figure 6) dans laquelle ils emprisonnent les galets 29a, 29b, afin de verrouiller les portes en position de fermeture.

L'actionneur 281 des crochets 280a, 280b, est relié auxdits crochets 280a, 280b, par des biellettes, respectivement supérieure 283a et inférieure 283b.

L'actionneur 281 des crochets 280a, 280b, est commandé par une commande de verrouillage C agencée pour commander à la fois le verrouillage des crochets 280a, 280b, et la fermeture des portes.

Ainsi, lorsque la fermeture des portes est commandée, le verrouillage des crochets est simultanément commandé par déplacement de l'actionneur 281 des crochets 280a, 280b selon la flèche c.

Les entraves 282a, 282b, sont agencés pour bloquer la rotation des crochets 280a, 280b vers la position de verrouillage, malgré la commande en verrouillage.

Elles sont en position de blocage.

Elles comprennent un premier bras A et un second bras B, reliés entre eux pas une liaison rotule L.

Les premier et second bras A, B sont articulés entre eux.

Le premier bras A est fixé au crochet 280a, 280b, tandis que le second bras B est fixé à la structure interne fixe 11 (figures 7 et 8).

Une butée fixe, respectivement supérieure 285a et inférieure 285b, est disposée sur la structure interne fixe 11 (figures 7 et 8), de sorte à limiter le mouvement du second bras B au-delà d'un certain angle pour assurer la fonction de blocage.

Les entraves 282a, 282b sont montées mobiles entre cette position de blocage et une position de déblocage (figure 2) dans laquelle elles autorisent la rotation des crochets 280a, 280b vers la position de verrouillage (figure 6).

Les dispositifs de déplacement 22a, 22b des entraves 282a, 282b sont aptes à coulisser de sorte à débloquer les entraves, lorsque les portes sont en position sensiblement fermée.

Ils sont disposés à l'aval des entraves 282a, 282b.

L'aval est la direction opposée à l'amont, l'amont étant représenté par la flèche F.

Ils sont reliés aux portes, respectivement supérieure 12a et inférieure 12b (figure 7), de façon à coulisser en direction des entraves 282a, 282b, c'est à dire dans la direction amont, lors de la fermeture des portes jusqu'à atteindre les rotules L ou le second bras B des entraves 282a, 282b.

Ainsi, lorsque les portes sont en position sensiblement fermée (figure 7), les entraves 282a, 282b sont débloquées et les crochets peuvent pivoter en position de verrouillage. Un ressort de blocage 284 disposé à l'amont des entraves 282a, 282b, permet d'exercer une force contre les entraves 282a, 282b, au niveau de leur rotule L, dans la direction opposée au déplacement de l'organe coulissant 22a, 22b lors de la fermeture de la porte, c'est à dire dans la direction aval.

Ainsi, le ressort de blocage 284 permet de positionner l'entrave 282a, 282b dans la position de blocage.

Dans cette position de blocage, seul un coulissement de l'organe coulissant 22a, 22b, dans la direction amont est conçu pour déplacer l'entrave 282a, 282b dans sa position de déblocage, en comprimant le ressort de blocage 284.

La figure 2 représente le système de verrouillage actif 28 en position de déverrouillage débloqué de portes en cours de fermeture.

Lors de la fermeture des portes, les organes coulissants 22a, 22b coulissent selon les flèches « f », dans la direction amont.

Lorsqu'ils entrent en contact avec la liaison rotule L des entraves 282a, 282b, ils déplacent les entraves 282a, 282b, dans leur position de déblocage.

Lorsqu'ils entrent en contact avec cette liaison rotule L, les galets 29a, 29b solidaires des portes sont disposés à l'intérieur des crochets 280a, 280b.

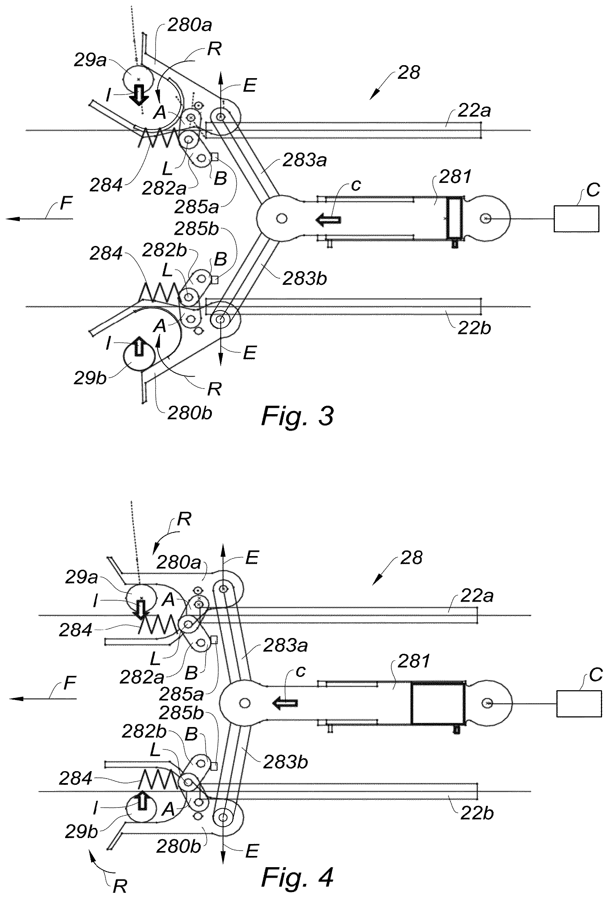

Dans cette position de déblocage, l'actionneur 281 des moyens de verrouillage 280a, 280b est conçu pour faire pivoter les crochets 280a, 280b, par l'intermédiaire des biellettes 283a, 283b (figure 3).

Le ressort de blocage 284 est alors comprimé par les entraves 282a, 282b déplacées par les organes coulissants 22a, 22b.

La figure 3 représente le système de verrouillage actif 28 en position de verrouillage actif de portes en cours de fermeture.

L'actionneur 281 des moyens de verrouillage 280a, 280b déplace l'extrémité des biellettes 283a, 283b qui lui sont attachées, vers l'amont.

Ainsi, l'extrémité des biellettes 283a, 283b attachée aux crochets est déplacée vers l'extérieur, selon les flèches E.

Ce déplacement des biellettes 283a, 283b, entraine une rotation des crochets 280a, 280b dans un premier sens indiqué par les flèches R.

Les crochets 280a, 280b entrent alors en contact avec les galets 29a, 29b solidaires des portes et les déplacent vers l'intérieur, selon les flèches I, ce qui entraine les portes en position de fermeture.

Le système de verrouillage actif 28 est donc en position de verrouillage actif.

Il permet d'assister la fermeture des portes.

Les entraves 282a, 282b, sont également déplacées en suivant le mouvement des crochets 280a, 280b et compriment les ressorts de blocage 284.

La figure 4 représente le système de verrouillage actif 28 en position de verrouillage débloqué de portes en position fermée.

L'actionneur 281 des moyens de verrouillage 280a, 280b déplace encore l'extrémité des biellettes 283a, 283b attaché aux crochets, vers l'extérieur, selon les flèches E.

Ce déplacement des biellettes 283a, 283b, entraine une rotation des crochets 280a, 280b dans un premier sens indiqué par les flèches R, ce qui permet de déplacer les galets 29a, 29b vers l'intérieur selon les flèches I. Les portes sont alors en position fermée.

Dans cette position, les biellettes 283a, 283b autorisent la rotation des crochets 280a, 280b vers la position de déverrouillage (figures 1 et 2).

Le système de verrouillage actif 28 est donc en position de verrouillage débloqué.

La figure 5 représente le système de verrouillage actif 28 en position de verrouillage débloqué de portes en position sur-escamotée.

L'actionneur 281 des moyens de verrouillage 280a, 280b déplace encore l'extrémité des biellettes 283a, 283b attaché aux crochets, vers l'extérieur, selon les flèches E.

Ce déplacement des biellettes 283a, 283b, entraine une rotation des crochets 280a, 280b dans le premier sens indiqué par les flèches R, ce qui permet de déplacer les galets 29a, 29b vers l'intérieur selon les flèches I. Les portes sont alors en position sur-escamotée.

Par position sur-escamotée on entend que les portes sont fermées au-delà de leur position de repos normal.

Dans cette position, les biellettes 283a, 283b autorisent la rotation des crochets 280a, 280b vers la position de déverrouillage (figures 1 et 2).

Le système de verrouillage actif 28 est donc en position de verrouillage débloqué.

La figure 6 représente le système de verrouillage actif 28 en position de verrouillage bloqué de portes en position fermée.

L'actionneur 281 des moyens de verrouillage 280a, 280b déplace l'extrémité des biellettes 283a, 283b qui lui sont attachées, vers l'amont.

Ainsi, l'extrémité des biellettes 283a, 283b attachée aux crochets est déplacée vers l'intérieure, selon les flèches « i ».

Ce déplacement des biellettes 283a, 283b, entraine une rotation des crochets 280a, 280b dans le sens opposé au premier sens, indiqué par les flèches « r ».

Les portes sont alors en position de fermeture.

Les entraves 282a, 282b, sont également déplacées en suivant le mouvement des crochets 280a, 280b.

Dans cette position, les biellettes 283a, 283b n'autorisent pas la rotation des crochets 280a, 280b vers la position de déverrouillage (figures 1 et 2).

Les biellettes 283a, 283b sont en position de blocage des crochets 280a, 280b.

Le système de verrouillage actif 28 est donc en position de verrouillage bloqué.

Les figures 7 et 8 représentent une partie d'une section aval S d'une nacelle, comprenant un inverseur de poussée 10 comportant un système de verrouillage actif 28 (figure 7) tel que décrit précédemment et un système de fermeture (figure 8) des portes, respectivement supérieure 12a et inférieure 12b.

Les portes 12a, 12b de l'inverseur de poussée de la figure 7 sont en position fermée de jet direct, tandis que les portes 12a, 12b de l'inverseur de poussée de la figure 8 sont en position ouverte de jet inversé.

La section aval S comporte une structure interne fixe 11 et une structure externe mobile comprenant deux portes, respectivement supérieure 12a et inférieure 12b.

L'amont de la section aval S est défini par la flèche F.

Les portes supérieure 12a et inférieure 12b sont en position de jet direct. Elles sont montées pivotantes entre cette position de jet direct, dans laquelle elles assurent la continuité aérodynamique de la nacelle, et une position de jet inversé (figure 8) dans laquelle elles ouvrent au moins un passage 14 (figure 8) dans la nacelle.

La position de jet direct correspond à la position de fermeture (portes fermées) tandis que la position de jet inversé correspond à la position d'ouverture (portes ouvertes).

Comme l'illustre la figure 8, l'inverseur de poussée 10 comporte un vérin double effet 15 d'un système de fermeture des portes, disposé sur la structure interne fixe 11 au niveau d'un premier bord latéral 120a, 120b des portes 12a, 12b. Il est agencé pour manoeuvrer les portes 12a, 12b de la position de jet direct (figure 7) vers la position de jet inversé (figure 8) et de la position de jet inversé (figure 8) vers la position de jet direct (figure 7).

Le vérin double effet 15 est un actionneur de manoeuvre permettant à la fois d'actionner la fermeture et l'ouverture des portes 12a, 12b.

Le système de verrouillage actif 28 (figure 7) est disposé sur la structure interne fixe 11, du côté opposé au vérin double effet 15 (figure 8), au niveau d'un bord latéral 121a, 121b opposé au premier bord latéral 120a, 120b, des portes 12a, 12b.

Le vérin double effet 15 (figure 8) est relié à chaque porte 12a, 12b par des premières bielles, respectivement supérieure 16a et inférieure 16b, tandis que le système de verrouillage actif 28 (figure 7) est relié à chaque porte 12a, 12b par des deuxièmes bielles, respectivement supérieure 18a et inférieure 18b, par l'intermédiaire des dispositifs de déplacement, respectivement supérieur 22a et inférieur 22b.

Chaque première bielle, respectivement supérieure 16a et inférieure 16b, est reliée au premier bord latéral, respectivement supérieur 120a et inférieur 120b, de chaque porte, respectivement supérieure 12a et inférieure 12b.

Chaque deuxième bielle, respectivement supérieure 18a et inférieure 18b, est reliée au bord latéral 121a, 121b opposé au premier bord latéral 120a, 120b, des portes 12a, 12b. Dans un mode de réalisation non représenté, le vérin double effet 15 est remplacé par un vérin simple effet de fermeture, agencé pour manoeuvrer les portes 12a, 12b vers la position de jet direct. Ce vérin simple effet de fermeture est un actionneur de fermeture. L'ouverture des portes est réalisée sous l'effet de la pression.

Dans une variante de ce mode de réalisation, un vérin simple effet d'ouverture (non représenté), est agencé sur la structure interne fixe 11 du côté opposé au vérin simple effet de fermeture, pour manoeuvrer les portes 12a, 12b vers la position de jet inversé. Ce vérin simple effet d'ouverture est un actionneur d'ouverture.

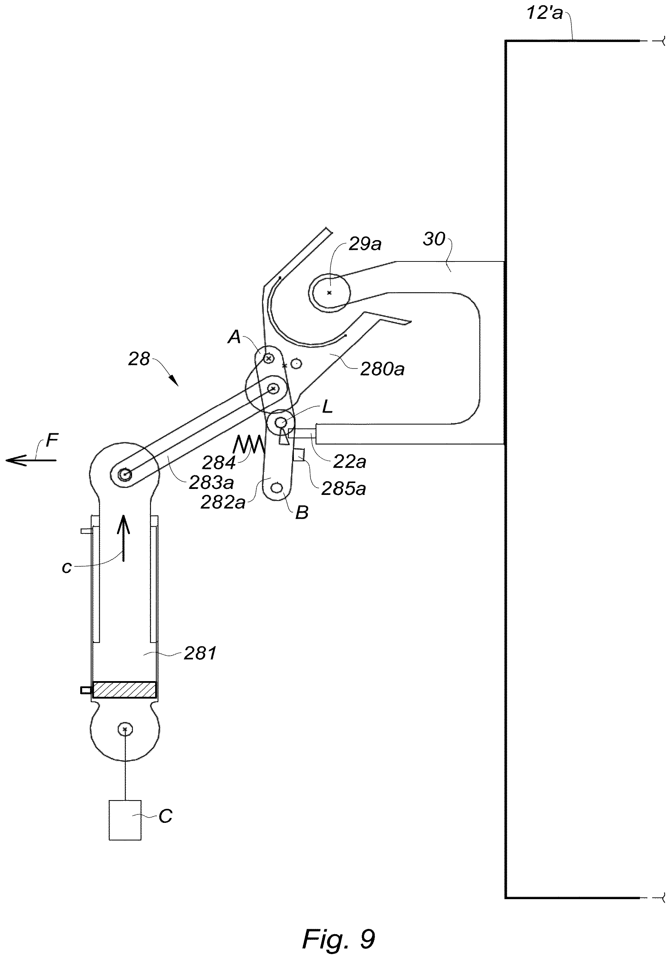

La figure 9 représente un système de verrouillage actif 28 en position de déverrouillage bloqué d'un capot translatant 12'a en position ouverte, comportant :
- un moyen de verrouillage 280a, sous forme de crochet,
- un actionneur 281 du moyens de verrouillage 280a, sous forme de vérin,
- un moyen de blocage 282a, du moyens de verrouillage 280a sous forme d'entrave, et
- un dispositif de déplacement 22a, du moyens de blocage 282a, sous forme d'organe coulissant.

Le crochet 280a est agencé pour laisser passer un galet 29a, solidaire du capot translatant 12'a via un support de galet 30, de façon à permettre l'ouverture et la fermeture dudit capot.

Il est en position de déverrouillage.

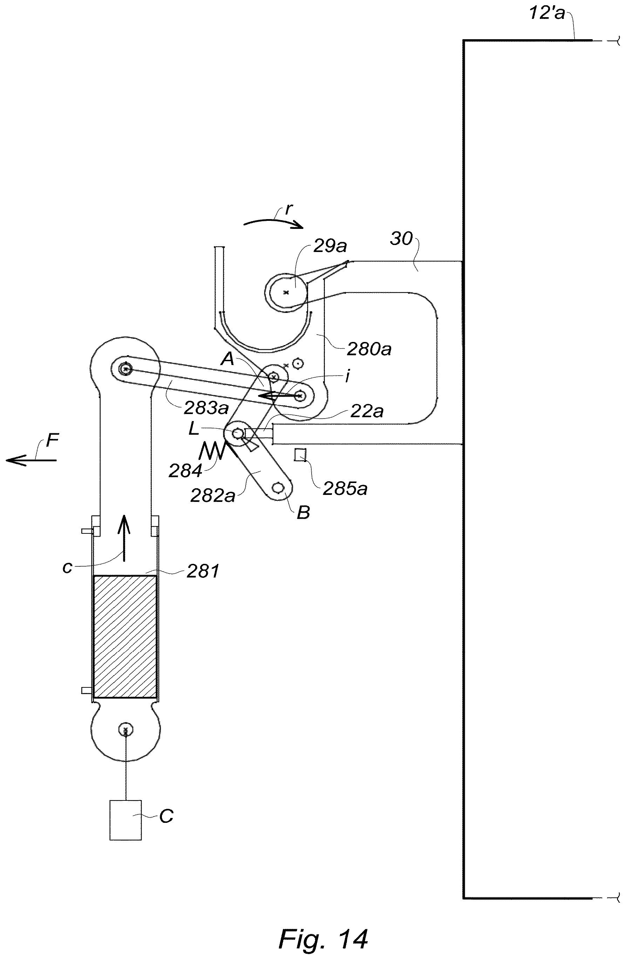

Le crochet 280a est monté pivotant entre cette position de déverrouillage et une position de verrouillage (figure 14) dans laquelle il emprisonne le galet 29a afin de verrouiller le capot translatant 12'a en position de fermeture.

L'actionneur 281 du crochet 280a est relié audit crochet 280a par une biellette 283a. L'actionneur 281 du crochet 280a, est commandé par une commande de verrouillage C agencée pour commander à la fois le verrouillage du crochet 280a, et la fermeture du capot translatant 12'a.

Ainsi, lorsque la fermeture du capot translatant 12'a est commandée, le verrouillage du crochet est simultanément commandé par déplacement de l'actionneur 281 du crochet 280a selon la flèche c.

L'entrave 282a est agencée pour bloquer la rotation du crochet 280a vers la position de verrouillage, malgré la commande en verrouillage.

Elle est en position de blocage.

Elle comprend un premier bras A et un second bras B, reliés entre eux pas une liaison rotule L.

Les premier et second bras A, B sont articulés entre eux.

Le premier bras A est fixé au crochet 280a, tandis que le second bras B est fixé à la structure interne fixe 11 (figures 7 et 8).

Une butée fixe 285a est disposée sur la structure interne fixe 11, de sorte à limiter le mouvement du second bras B au-delà d'un certain angle pour assurer la fonction de blocage.

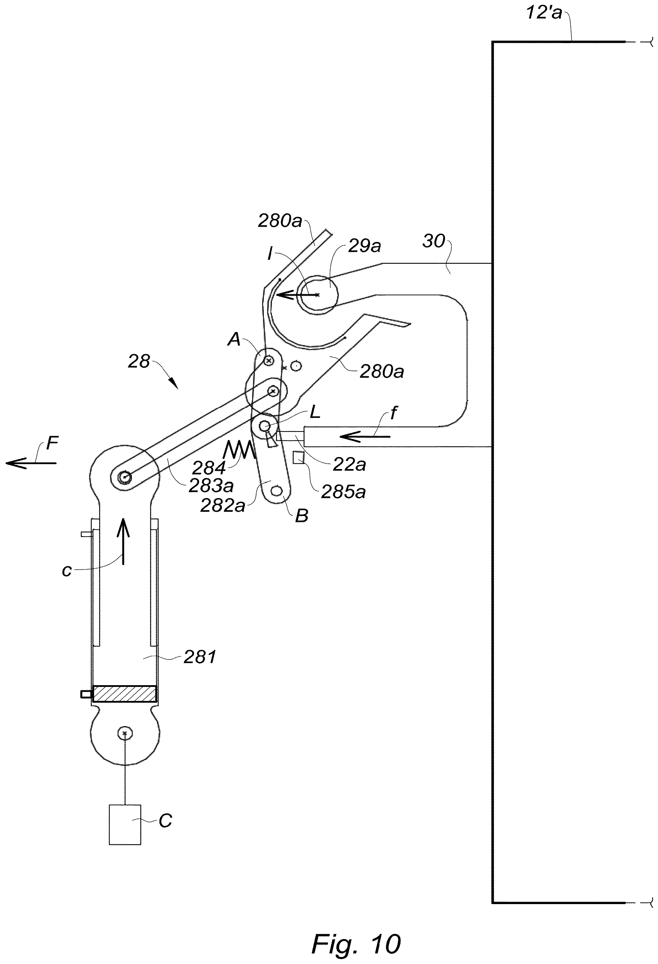

L'entrave 282a est montée mobile entre cette position de blocage et une position de déblocage (figure 10) dans laquelle elle autorise la rotation du crochet 280a vers la position de verrouillage (figure 14).

Le dispositif de déplacement 22a de l'entrave 282a est conçu pour coulisser de sorte à débloquer l'entrave, lorsque le capot translatant est en position sensiblement fermée. Le dispositif de déplacement 22a est disposé à l'aval de l'entrave 282a.

L'aval est la direction opposée à l'amont, l'amont étant représenté par la flèche F.

Le dispositif de déplacement 22a est relié au capot translatant 12'a, de façon à coulisser en direction de l'entrave 282a c'est à dire dans la direction amont, lors de la fermeture du capot translatant 12'a jusqu'à atteindre la rotule L ou le second bras B de l'entrave 282a.

Ainsi, lorsque le capot translatant est en position sensiblement fermée, l'entrave 282a est débloquée et le crochet peut pivoter en position de verrouillage.

Un ressort de blocage 284 disposé à l'amont de l'entrave 282a, permet d'exercer une force contre l'entrave 282a, au niveau de sa rotule L, dans la direction opposée au déplacement de l'organe coulissant 22a lors de la fermeture du capot translatant, c'est à dire dans la direction aval.

Ainsi, le ressort de blocage 284 permet de positionner l'entrave 282a dans la position de blocage.

Dans cette position de blocage, seul un coulissement de l'organe coulissant 22a, dans la direction amont est conçu pour déplacer l'entrave 282a dans sa position de déblocage, en comprimant le ressort de blocage 284.

La figure 10 représente le système de verrouillage actif 28 en position de déverrouillage débloqué du capot translatant en cours de fermeture.

Lors de la fermeture du capot translatant 12'a, l'organe coulissant 22a coulisse selon les flèches « f », dans la direction amont.

Lorsque l'organe coulissant 22a entre en contact avec la liaison rotule L de l'entrave 282a, il déplace l'entrave 282a dans sa position de déblocage.

Lorsque l'organe coulissant 22a entre en contact avec cette liaison rotule L, le galet 29a, solidaires du capot translatant 12'a, est disposé à l'intérieur du crochet 280a.

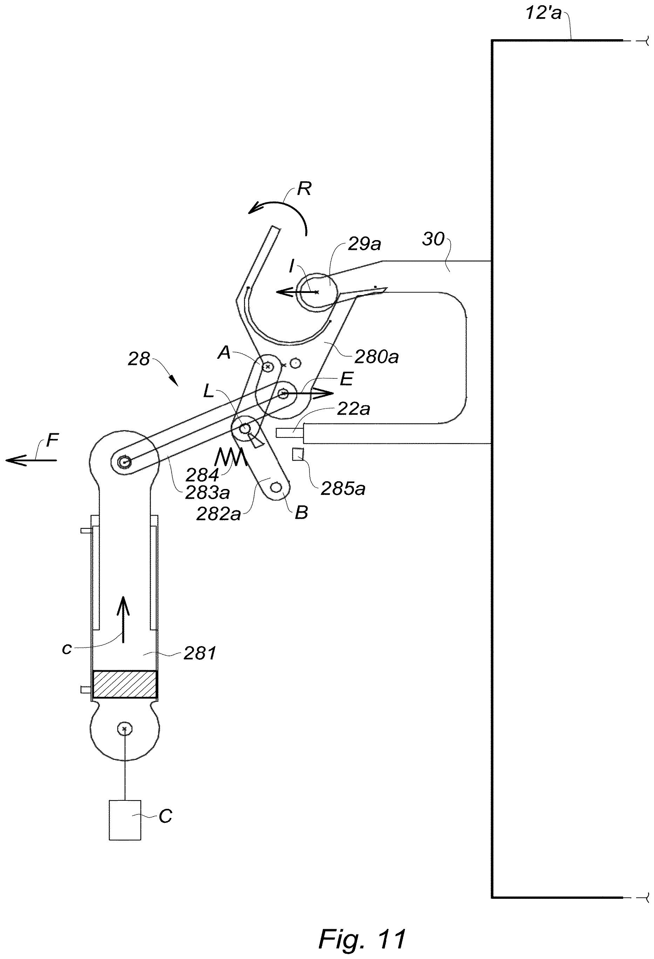

Dans cette position de déblocage, l'actionneur 281 du moyen de verrouillage 280a est conçu pour faire pivoter le crochet 280a, par l'intermédiaire de la biellette 283a (figure 11).

Le ressort de blocage 284 est alors comprimé par l'entrave 282a déplacée par l'organe coulissant 22a.

La figure 11 représente le système de verrouillage actif 28 en position de verrouillage actif du capot translatant en cours de fermeture.

L'actionneur 281 du moyen de verrouillage 280a déplace l'extrémité de la biellette 283a qui lui est attachée, vers l'amont.

Ainsi, l'extrémité de la biellette 283a attachée au crochet est déplacée vers l'extérieur, selon les flèches E.

Ce déplacement de la biellette 283a, entraine une rotation du crochet 280a dans un premier sens indiqué par la flèche R.

Le crochet 280a entre alors en contact avec le galet 29a solidaire du capot translatant et le déplace vers l'intérieur, selon les flèches I, ce qui entraine le capot translatant en position de fermeture.

Le système de verrouillage actif 28 est donc en position de verrouillage actif.

Il permet d'assister la fermeture du capot translatant.

L'entrave 282a est également déplacée en suivant le mouvement du crochet 280a et comprime le ressort de blocage 284.

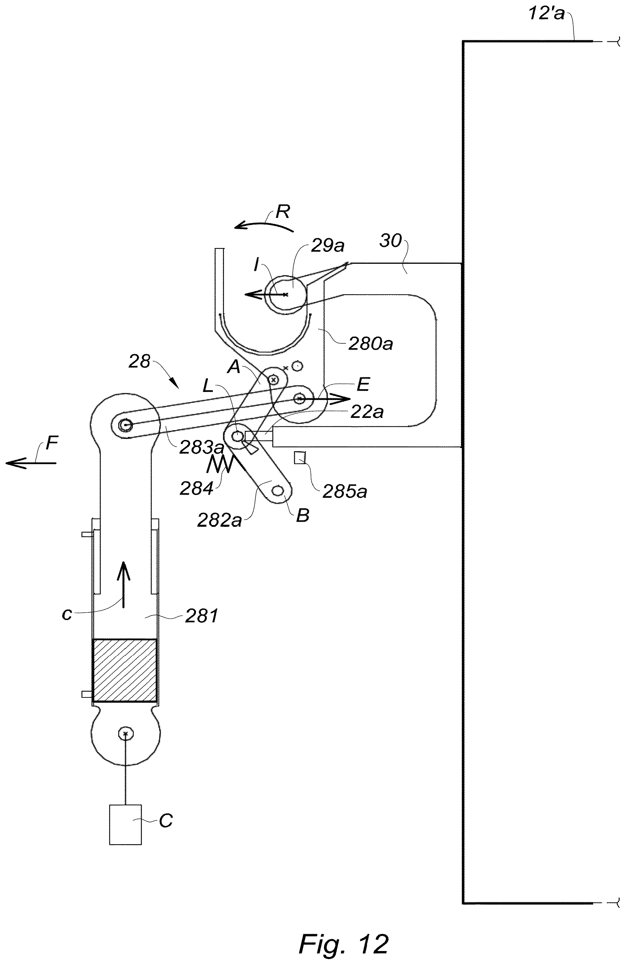

La figure 12 représente le système de verrouillage actif 28 en position de verrouillage débloqué du capot translatant en position fermée.

L'actionneur 281 du moyen de verrouillage 280a déplace encore l'extrémité de la biellette 283a attachée au crochet, vers l'extérieur, selon la flèche E.

Ce déplacement de la biellette 283a, entraine une rotation du crochet 280a dans un premier sens indiqué par la flèche R, ce qui permet de déplacer le galet 29a vers l'intérieur selon la flèche I. Le capot translatant est alors en position fermée.

Dans cette position, la biellette 283a autorise la rotation du crochet 280a vers la position de déverrouillage (figures 9 et 10).

Le système de verrouillage actif 28 est donc en position de verrouillage débloqué.

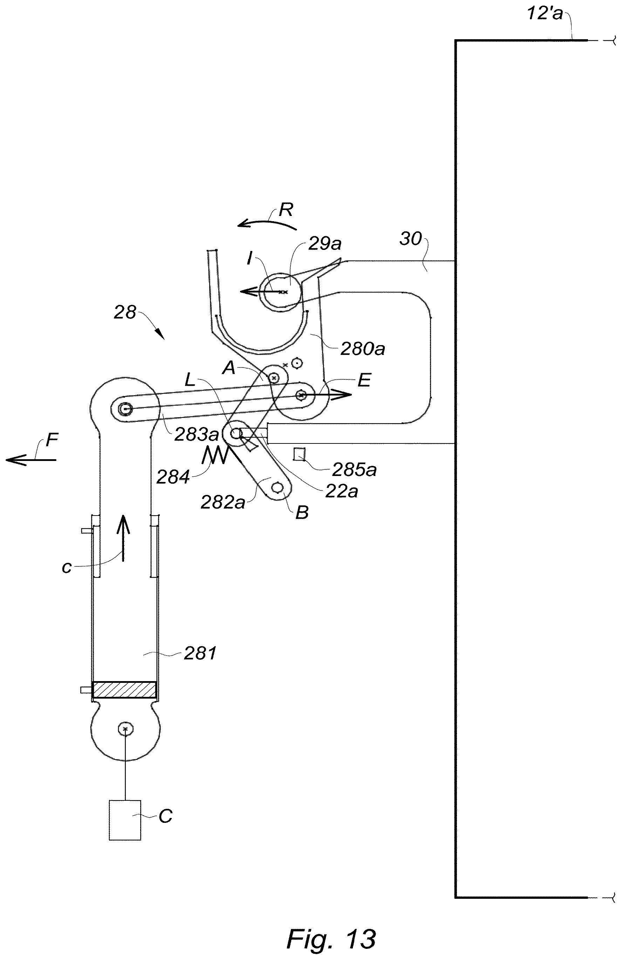

La figure 13 représente le système de verrouillage actif 28 en position de verrouillage débloqué du capot translatant en position sur-escamotée.

L'actionneur 281 du moyen de verrouillage 280a déplace encore l'extrémité de la biellette 283a attachée au crochet, vers l'extérieur, selon la flèche E.

Ce déplacement de biellette 283a, entraine une rotation du crochet 280a dans le premier sens indiqué par la flèche R, ce qui permet de déplacer le galet 29a vers l'intérieur selon la flèche I. Le capot translatant est alors en position sur-escamotée.

Par position sur-escamotée on entend que le capot translatant est fermé au-delà de sa position de repos normal.

Dans cette position, la biellette 283a autorisent la rotation du crochet 280a vers la position de déverrouillage (figures 9 et 10).

Le système de verrouillage actif 28 est donc en position de verrouillage débloqué.

La figure 14 représente le système de verrouillage actif 28 en position de verrouillage bloqué du capot translatant en position fermée.

L'actionneur 281 du moyen de verrouillage 280a déplace l'extrémité de la biellette 283a qui lui est attachée, vers l'amont.

Ainsi, l'extrémité de biellette 283a attachée au crochet, est déplacée vers l'intérieure, selon la flèche « i ».

Ce déplacement de biellette 283a, entraine une rotation du crochet 280a dans le sens opposé au premier sens, indiqué par la flèche « r ».

Le capot translatant est alors en position de fermeture.

L'entrave 282a est également déplacée en suivant le mouvement du crochet 280a. Dans cette position, la biellette 283a n'autorise pas la rotation du crochet 280a vers la position de déverrouillage (figures 9 et 10).

La biellette 283a est en position de blocage du crochet 280a.

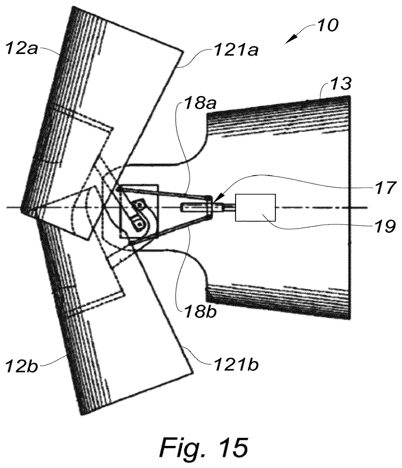

Le système de verrouillage actif 28 est donc en position de verrouillage bloqué. Comme l'illustre la figure 15, l'inverseur de poussée 10 des figures 7 et 8 comporte, dans un mode de réalisation, un élément glissant 17 disposé sur la structure interne fixe 11 (non représentée) du côté opposé au vérin double effet 15 (figure 8).

L'élément glissant 17 est relié à chaque porte 12a, 12b par les deuxièmes bielles, respectivement supérieure 18a et inférieure 18b. Ainsi, l'élément glissant 17 est disposé sur la structure interne fixe, au niveau du bord latéral 121a, 121b opposé au premier bord latéral 120a, 120b des portes 12a, 12b.

L'inverseur de poussée 10 comporte en outre un dispositif de détection 19 de la rupture d'une bielle 16a, 16b, 18a, 18b.

Les deuxièmes bielles 18a, 18b, sont agencées pour être entrainées par les portes 12a, 12b, lorsque le vérin double effet 15 (figure 8) manoeuvre les portes 12a, 12b, vers la position de jet direct (figure 7), en coulissant dans l'élément glissant 17.

L'élément glissant 17 comporte deux logements, respectivement supérieur et inférieur (non représentés), dans lesquels coulissent les dispositifs de déplacement, respectivement supérieur 22a et inférieur 22b, des moyens de blocage, respectivement supérieur 282a et inférieur 282b (figures 1 à 6). Les logements sont reliés par un dispositif de liaison (non représenté).

Les dispositifs de déplacement peuvent également être nommés organes coulissants. Des ressorts, respectivement supérieur et inférieur (non représentés), sont disposés dans les logements, à l'amont des dispositifs de déplacement, respectivement supérieur 22a et inférieur 22b (figures 1 à 6).

L'élément glissant 17 forme une butée de fin de course à l'amont de chaque dispositif de déplacement 22a, 22b.

Comme indiqué précédemment, au regard de la figure 7, chaque dispositif de déplacement 22a, 22b porte une deuxième bielle 18a, 18b. Ainsi, chaque deuxième bielle 18a, 18b comporte une extrémité reliée à une porte 12a, 12b, et une extrémité opposée reliée à un dispositif de déplacement 22a, 22b.

Plus précisément, les deuxièmes bielles 18a, 18b, sont agencées pour être entrainées par les portes 12a, 12b lorsque le vérin double effet 15 (figure 8) manoeuvre les portes 12a, 12b vers la position de jet direct, de façon à déplacer les dispositif de déplacement 22a, 22b auxquels elles sont reliées.

Chaque ressort (non représenté) est conçu pour être comprimé par le dispositif de déplacement 22a, 22b auquel il est associé, lorsque les deuxièmes bielles 18a, 18b sont entrainées par les portes 12a, 12b en position de jet direct. En outre, chaque ressort permet d'exercer une force contre le dispositif de déplacement 22a, 22b auquel il est associé, dans la direction opposée au déplacement engendré par les deuxièmes bielles 18a, 18b, entrainées par les portes 12a, 12b en position de jet direct, et est conçu pour être comprimé par le dispositif de déplacement 22a, 22b auquel il est associé, lorsque les deuxièmes bielles 18a, 18b sont entrainées par les portes 12a, 12b en position de jet direct. Ainsi, en position de jet direct, les ressorts sont comprimés par les dispositifs de déplacement 22a, 22b, et un jeu est présent dans chaque logement, à l'aval de chaque dispositif de déplacement 22a, 22b.

L'élément glissant 17 est conçu pour coulisser sous l'action d'une deuxième bielle 18a ou 18b lorsqu'un ressort est comprimé dans le sens de la fermeture, ou lorsque le jeu est consommé dans le sens de l'ouverture.

En conséquence, une porte dont la première bielle serait rompue est fermée ou ouverte lors du coulissement de l'élément glissant.

Le dispositif de détection 19 de la rupture d'une bielle 16a, 16b, 18a, 18b est associé aux entraves 282a, 282b (figures 1 à 6), qui agissent en tant que capteurs de détection de la rupture d'une bielle.

Les entraves 282a, 282b sont débloquées (position de déblocage de la figure 2) lorsque les bielles sont fonctionnelles.

## Revendications

1. Système de verrouillage actif (28) d'un élément mobile (12a, 12b ; 12'a, 12'b) pour inverseur de poussée (10) d'une nacelle d'aéronef, l'inverseur de poussée (10) étant du type comportant une structure fixe et au moins un élément mobile (12a, 12b ; 12'a, 12'b), ledit élément mobile étant monté pivotant ou translatant entre une position de jet direct, dans laquelle il assure la continuité aérodynamique de la nacelle, et une position de jet inversé dans laquelle il ouvre au moins un passage (14) dans la nacelle, le système de verrouillage (28) comportant :
- un moyen de verrouillage (280a, 280b) actif de l'élément mobile (12a, 12b ; 12'a, 12'b), mobile entre une position de verrouillage et une position de déverrouillage,
- un actionneur (281) du moyen de verrouillage (280a, 280b) commandé par une commande d'actionnement du moyen de verrouillage (C),
- un moyen de blocage (282a, 282b) du moyen de verrouillage en position déverrouillée, mobile entre une position de blocage et une position de déblocage,
- un dispositif de déplacement (22a, 22b) du moyen de blocage (282a, 282b),
où la commande d'actionnement du moyen de verrouillage (C) est destinée à commander en fermeture l'élément mobile, et en ce que le dispositif de déplacement (22a, 22b) du moyen de blocage (282a, 282b) est destiné à déplacer le moyen de blocage (282a, 282b) en position de déblocage lorsque l'élément mobile (12a, 12b ; 12'a, 12'b) est à une position prédéterminée, et **caractérisé en ce que** le moyen de blocage (282a, 282b) comporte deux bras (A, B) articulés entre eux, un premier bras (A) étant fixé au moyen de verrouillage (280a, 280b) et l'autre bras (B) étant destiné à être fixé à la structure fixe.

2. Système de verrouillage actif (28) selon la revendication précédente, dans lequel le dispositif de déplacement (22a, 22b) du moyen de blocage (282a, 282b) est destiné à être mécaniquement lié à l'élément mobile (12a, 12b ; 12'a, 12'b).

3. Système de verrouillage actif (28) selon l'une quelconque des revendications précédentes, dans lequel le dispositif de déplacement (22a, 22b) du moyen de blocage (282a, 282b) est un organe coulissant destiné à être relié à l'élément mobile (12a, 12b ; 12'a, 12'b), conçu pour coulisser lors de la fermeture de l'élément mobile en direction du moyen de blocage (282a, 282b) de façon à le déplacer en position de déblocage lorsque l'élément mobile (12a, 12b ; 12'a, 12'b) est dans une position prédéterminée.

4. Système de verrouillage actif (28) selon l'une quelconque des revendications précédentes, dans lequel un ressort de blocage (284) est destiné à exercer une force contre le moyen de blocage (282a, 282b) dans la direction opposée au déplacement du dispositif de déplacement (22a, 22b) du moyen de blocage (282a, 282b) lors de la fermeture de l'élément mobile (12a, 12b ; 12'a, 12'b), ledit ressort (284) étant conçu pour être comprimé par le moyen de blocage (282a, 282b) lors du déplacement du dispositif de déplacement (22a, 22b) lors de la fermeture de l'élément mobile (12a, 12b; 12'a, 12'b).

5. Système de fermeture d'une paire de portes pour inverseur de poussée d'une nacelle d'aéronef, les portes étant diamétralement opposées et montées pivotantes entre une position de jet direct, dans laquelle elles assurent la continuité aérodynamique de la nacelle, et une position de jet inversé dans laquelle elles ouvrent au moins un passage dans la nacelle, le système de fermeture comprenant :
- un actionneur de fermeture des portes comportant deux premières bielles, chaque première bielle étant reliée à un premier bord latéral de chaque porte, ledit actionneur étant agencé pour manoeuvrer chaque porte au moins vers la position de jet direct,
- deux organes coulissants portant chacun une deuxième bielle reliée au bord latéral opposé au premier bord latéral de chaque porte, lesdites bielles étant agencées pour être entrainées par les portes lorsque l'actionneur de fermeture manoeuvre les portes vers la position de jet direct, de façon à déplacer les organes coulissants, et
- un système de verrouillage des portes selon l'une quelconque des revendications précédentes.

6. Système de fermeture d'une paire de portes selon la revendication précédente, comportant en outre un dispositif de détection de rupture d'une bielle.

7. Inverseur de poussée (10) d'une nacelle d'aéronef, l'inverseur de poussée (10) étant du type comportant au moins un élément mobile (12a, 12b ; 12'a, 12'b) monté pivotant ou translatant entre une position de jet direct, dans laquelle il assure la continuité aérodynamique de la nacelle, et une position de jet inversé, dans laquelle il ouvre au moins un passage (14) dans la nacelle, **caractérisé en ce que** l'inverseur de poussée (10) comprend au moins un système de verrouillage actif selon l'une quelconque des revendications 1 à 4.

8. Inverseur de poussée selon la revendication précédente, comprenant au moins un élément mobile (12'a) sous forme de capot translatant, dans lequel le système de verrouillage actif comprend :
- un moyen de verrouillage (280a) actif du capot translatant (12'a), mobile entre une position de verrouillage et une position de déverrouillage,
- un actionneur (281) du moyen de verrouillage (280a) commandé par une commande de verrouillage (C),
- un moyen de blocage (282a) du moyen de verrouillage (280a) en position déverrouillée, mobile entre une position de blocage et une position de déblocage,
- un dispositif de déplacement (22a) du moyen de blocage (282a).

9. Inverseur de poussée selon la revendication 7, comprenant deux éléments mobiles (12a, 12b) sous forme de portes pivotantes diamétralement opposées, dans lequel le système de verrouillage actif comprend :
- un moyen de verrouillage (280a, 280b) actif de chaque porte pivotante (12a, 12b), mobile entre une position de verrouillage et une position de déverrouillage,
- un actionneur (281) des moyens de verrouillage (280a, 280b) commandé par une commande de verrouillage (C),
- un moyen de blocage (282a, 282b) de chaque moyen de verrouillage (280a, 280b) en position déverrouillée, mobile entre une position de blocage et une position de déblocage,
- un dispositif de déplacement (22a, 22b) de chaque moyen de blocage (282a, 282b).

10. Inverseur de poussée selon la revendication précédente, comprenant en outre un système de fermeture des portes pivotantes (12a, 12b) comprenant :
- un actionneur de fermeture (15) des portes (12a, 12b) comportant deux premières bielles (16a, 16b), chaque première bielle étant reliée à un premier bord latéral (120a, 120b) de chaque porte (12a, 12b), ledit actionneur étant agencé pour manoeuvrer chaque porte au moins vers la position de jet direct,
- deux organes coulissants (22a, 22b) portant chacun une deuxième bielle (18a, 18b) reliée au bord latéral opposé (121a, 121b) au premier bord latéral (120a, 120b) de chaque porte, lesdites bielles (18a, 18b) étant agencées pour être entrainées par les portes (12a, 12b) lorsque l'actionneur de fermeture (15) manoeuvre les portes (12a, 12b) vers la position de jet direct, de façon à déplacer les organes coulissants (22a, 22b), et lesdits organes coulissants formant les dispositifs de déplacement (22a, 22b) de chaque moyen de blocage (282a, 282b).

11. Inverseur de poussée selon la revendication précédente, dans lequel le système de fermeture comporte un dispositif de détection (19) de rupture d'une bielle.

## Patentansprüche

1. Aktives Verriegelungssystem (28) eines beweglichen Elements (12a, 12b; 12'a, 12'b) für eine Schubumkehrvorrichtung (10) einer Flugzeuggondel, wobei die Schubumkehrvorrichtung (10) von dem Typ ist, der eine feste Struktur und mindestens ein bewegliches Element (12a, 12b; 12'a, 12'b) umfasst, wobei das mindestens eine bewegliche Element schwenkbar oder translatorisch zwischen einer Direktstrahlposition, in der es die aerodynamische Kontinuität der Gondel gewährleistet, und einer Umkehrstrahlposition, in der es mindestens einen Durchgang (14) in der Gondel öffnet, montiert ist, wobei das Verriegelungssystem (28) Folgendes umfasst:
- ein aktives Verriegelungsmittel (280a, 280b) des beweglichen Elements (12a, 12b; 12'a, 12'b), das zwischen einer Verriegelungsposition und einer Entriegelungsposition beweglich ist,
- einen Aktuator (281) des Verriegelungsmittels (280a, 280b), der durch einen Betätigungsbefehl des Verriegelungsmittels (C) gesteuert wird,
- ein Mittel zum Blockieren (282a, 282b) des Verriegelungsmittels in der entriegelten Position, das zwischen einer Blockierposition und einer Freigabeposition beweglich ist, und
- eine Vorrichtung zum Verschieben (22a, 22b) des Blockiermittels (282a, 282b),
wobei der Betätigungsbefehl des Verriegelungsmittels (C) dazu bestimmt ist, das bewegliche Element beim Schließen zu steuern, und dass die Vorrichtung zum Verschieben (22a, 22b) des Blockiermittels (282a, 282b) dazu bestimmt ist, das Blockiermittel (282a, 282b) in die Freigabeposition zu verschieben, wenn sich das bewegliche Element (12a, 12b; 12'a, 12'b) in einer vorbestimmten Position befindet,
wobei das Blockiermittel (282a, 282b) zwei aneinander angelenkte Arme (A, B) umfasst, wobei ein erster Arm (A) am Verriegelungsmittel (280a, 280b) befestigt ist und der andere Arm (B) dazu bestimmt ist, an der festen Struktur befestigt zu sein.

2. Aktives Verriegelungssystem (28) nach dem vorhergehenden Anspruch, wobei die Vorrichtung zum Verschieben (22a, 22b) des Blockiermittels (282a, 282b) dazu bestimmt ist, mechanisch mit dem beweglichen Element (12a, 12b; 12'a, 12'b) verbunden zu sein.

3. Aktives Verriegelungssystem (28) nach einem der vorhergehenden Ansprüche, wobei die Vorrichtung zum Verschieben (22a, 22b) des Blockiermittels (282a, 282b) ein Gleitelement ist, das dazu bestimmt ist, mit dem beweglichen Element (12a, 12b; 12'a, 12'b) verbunden zu sein, und so konzipiert ist, dass es während des Schließens des beweglichen Elements in Richtung des Blockiermittels (282a, 282b) gleitet, um dieses in die Freigabeposition zu verschieben, wenn sich das bewegliche Element (12a, 12b; 12'a, 12'b) in einer vorbestimmten Position befindet.

4. Aktives Verriegelungssystem (28) nach einem der vorhergehenden Ansprüche, wobei eine Blockierfeder (284) dazu bestimmt ist, eine Kraft gegen das Blockiermittel (282a, 282b) in der Richtung auszuüben, die das Verschieben der Vorrichtung zum Verschieben (22a, 22b) des Blockiermittels (282a, 282b) während des Schließens des beweglichen Elements (12a, 12b; 12'a, 12'b) entgegengesetzt ist, wobei die Feder (284) so konzipiert ist, dass sie durch das Blockiermittel (282a, 282b) während des Verschiebens der Vorrichtung zum Verschieben (22a, 22b) während des Schließens des beweglichen Elements (12a, 12b; 12'a, 12'b) komprimiert wird.

5. Schließsystem für ein Türpaar für eine Schubumkehrvorrichtung einer Flugzeuggondel, wobei die Türen diametral gegenüberliegend und schwenkbar zwischen einer Direktstrahlposition, in der sie die aerodynamische Kontinuität der Gondel gewährleisten, und einer Umkehrstrahlposition, in der sie mindestens einen Durchgang in der Gondel öffnen, montiert sind, wobei das Schließsystem Folgendes beinhaltet:
- einen Aktuator zum Schließen der Türen, der zwei erste Verbindungsstangen umfasst, wobei jede erste Verbindungsstange mit einer ersten Seitenkante jeder Tür verbunden ist, wobei der Aktuator so angeordnet ist, dass er jede Tür mindestens in die Direktstrahlposition lenkt,
- zwei Gleitelemente, die jeweils eine zweite Verbindungsstange tragen, die mit der Seitenkante gegenüber der ersten Seitenkante jeder Tür verbunden ist, wobei die Verbindungsstangen so angeordnet sind, dass sie durch die Türen angetrieben werden, wenn der Schließaktuator die Türen in die Direktstrahlposition lenkt, um so die Gleitelemente zu verschieben, und
- ein aktives Verriegelungssystem der Türen nach einem der vorhergehenden Ansprüche.

6. Schließsystem für ein Türpaar nach dem vorhergehenden Anspruch, das ferner eine Detektionsvorrichtung für Brüche in einer Verbindungsstange umfasst.

7. Schubumkehrvorrichtung (10) einer Flugzeuggondel, wobei die Schubumkehrvorrichtung (10) von dem Typ ist, der mindestens ein bewegliches Element (12a, 12b; 12'a, 12'b) umfasst, das schwenkbar oder translatorisch zwischen einer Direktstrahlposition, in der es die aerodynamische Kontinuität der Gondel gewährleistet, und einer Umkehrstrahlposition, in der es mindestens einen Durchgang (14) in der Gondel öffnet, montiert ist, **dadurch gekennzeichnet, dass** die Schubumkehrvorrichtung (10) mindestens ein aktives Verriegelungssystem nach einem der Ansprüche 1bis 4 beinhaltet.

8. Schubumkehrvorrichtung nach dem vorhergehenden Anspruch, die mindestens ein bewegliches Element (12'a) in Form einer translatorischen Abdeckung beinhaltet, wobei das aktive Verriegelungssystem Folgendes beinhaltet:
- ein aktives Verriegelungsmittel (280a) der translatorischen Abdeckung (12'a), das zwischen einer Verriegelungsposition und einer Entriegelungsposition beweglich ist,
- einen Aktuator (281) des Verriegelungsmittels (280a), der durch einen Betätigungsbefehl (C) gesteuert wird,
- ein Mittel zum Blockieren (282a) des Verriegelungsmittels (280a) in der entriegelten Position, das zwischen einer Blockierposition und einer Freigabeposition beweglich ist,
- eine Vorrichtung zum Verschieben (22a) des Blockiermittels (282a).

9. Schubumkehrvorrichtung nach Anspruch 7, die zwei bewegliche Elemente (12a, 12b) in Form von diametral gegenüberliegenden, schwenkbaren Türen beinhaltet, wobei das aktive Verriegelungssystem Folgendes beinhaltet:
- ein aktives Verriegelungsmittel (280a, 280b) jeder schwenkbaren Tür (12a, 12b), das zwischen einer Verriegelungsposition und einer Entriegelungsposition beweglich ist,
- einen Aktuator (281) des Verriegelungsmittels (280a, 280b), der durch einen Betätigungsbefehl (C) gesteuert wird,
- ein Mittel zum Blockieren (282a, 282b) jedes Verriegelungsmittels (280a, 280b) in der entriegelten Position, das zwischen einer Blockierposition und einer Freigabeposition beweglich ist,
- eine Vorrichtung zum Verschieben (22a, 22b) jedes Blockiermittels (282a, 282b).

10. Schubumkehrvorrichtung nach dem vorhergehenden Anspruch, die ferner ein Schließsystem für die schwenkbaren Türen (12a, 12b) beinhaltet, das Folgendes beinhaltet:
- einen Schließaktuator (15) für die Türen (12a, 12b), der zwei erste Verbindungsstangen (16a, 16b) umfasst, wobei jede erste Verbindungsstange mit einer ersten Seitenkante (120a, 120b) jeder Tür (12a, 12b) verbunden ist, wobei der Aktuator so angeordnet ist, dass er jede Tür mindestens in die Direktstrahlposition lenkt,
- zwei Gleitelemente (22a, 22b), die jeweils eine zweite Verbindungsstange (18a, 18b) tragen, die mit der der ersten Seitenkante (120a, 120b) jeder Tür gegenüberliegenden Seitenkante (121a, 121b) verbunden ist, wobei die Verbindungsstangen (18a, 18b) so angeordnet sind, dass sie durch die Türen (12a, 12b) angetrieben werden, wenn der Schließaktuator (15) die Türen (12a, 12b) in die Direktstrahlposition lenkt, um so die Gleitelemente (22a, 22b) zu verschieben, und die Gleitelemente die Vorrichtungen zum Verschieben (22a, 22b) jedes Blockiermittels (282a, 282b) bilden.

11. Schubumkehrvorrichtung nach dem vorhergehenden Anspruch, wobei das Schließsystem eine Detektionsvorrichtung (19) für Brüche in einer Verbindungsstange umfasst.

## Claims

1. An active locking system (28) of a movable element (12a, 12b; 12'a, 12'b) for a thrust reverser (10) of an aircraft nacelle, the thrust reverser (10) being of the type including a fixed structure and at least one movable element (12a, 12b; 12'a, 12'b), said movable element being mounted pivoting or translating between a direct jet position, in which it ensures the aerodynamic continuity of the nacelle, and a reverse jet position in which it opens at least one passage (14) in the nacelle, the locking system (28) including:
- an active locking means (280a, 280b) of the movable element (12a, 12b; 12'a, 12'b), movable between a locking position and an unlocking position,
- an actuator (281) of the locking means (280a, 280b) controlled by a command for actuating the locking means (C),
- a means for blocking (282a, 282b) the locking means in the unlocked position, movable between a blocking position and an unblocking position,
- a device for displacing (22a, 22b) the blocking means (282a, 282b),
wherein the command for actuating the locking means (C) is intended to control the closure of the movable element, and the device for displacing (22a, 22b) the blocking means (282a, 282b) is intended to displace the blocking means (282a, 282b) into the unblocking position when the movable element (12a, 12b; 12'a, 12'b) is at a predetermined position,
and **characterized in that** the blocking means (282a, 282b) includes two arms (A, B) mutually articulated, a first arm (A) being fastened to the locking means (280a, 280b) and the other arm (B) being intended to be fastened to the fixed structure.

2. The active locking system (28) according to the preceding claim, wherein the device for displacing (22a, 22b) the blocking means (282a, 282b) is intended to be mechanically linked to the movable element (12a, 12b; 12'a, 12'b).

3. The active locking system (28) according to any one of the preceding claims, wherein the device for displacing (22a, 22b) the blocking means (282a, 282b) is a sliding member intended to be connected to the movable element (12a, 12b; 12'a, 12'b), configured to slide during the closure of the movable element towards the blocking means (282a, 282b) so as to displace it into the unlocking position when the movable element (12a, 12b; 12'a, 12'b) is in a predetermined position.

4. The active locking system (28) according to any one of the preceding claims, wherein a blocking spring (284) is intended to exert a force against the blocking means (282a, 282b) in a direction opposite to the displacement of the device for displacing (22a, 22b) the blocking means (282a, 282b) during the closure of the movable element (12a, 12b; 12'a, 12'b), said spring (284) being configured to be compressed by the blocking means (282a, 282b) during the displacement of the displacement device (22a, 22b) during the closure of the movable element (12a, 12b; 12'a, 12'b).

5. A system for closing a pair of doors for a thrust reverser of an aircraft nacelle, the doors being diametrically opposed and pivotally mounted between a direct jet position, in which they ensure the aerodynamic continuity of the nacelle, and a reverse jet position in which they open at least one passage in the nacelle, the closing system comprising:
- an actuator for closing the doors including two first connecting rods, each first connecting rod being connected to a first lateral edge of each door, said actuator being configured to operate each door at least towards the direct jet position,
- two sliding members each carrying a second connecting rod connected to the lateral edge opposite to the first lateral edge of each door, said connecting rods being configured to be driven by the doors when the closing actuator operates the doors towards the direct jet position, so as to displace the sliding members, and
- a system for locking the doors according to any one of the preceding claims.

6. The system for closing a pair of doors according to the preceding claim, further including a device for detecting a breakage of a connecting rod.

7. A thrust reverser (10) of an aircraft nacelle, the thrust reverser (10) being of the type including at least one movable element (12a, 12b; 12'a, 12'b) mounted pivoting or translating between a direct jet position, in which it ensures the aerodynamic continuity of the nacelle, and a reverse jet position, in which it opens at least one passage (14) in the nacelle, **characterized in that** the thrust reverser (10) comprises at least one active locking system according to any one of claims 1 to 4.

8. The thrust reverser according to the preceding claim, comprising at least one movable element (12'a) in the form of a translating cowl, wherein the active locking system comprises:
- an active locking means (280a) of the translating cowl (12'a), movable between a locking position and an unlocking position,
- an actuator (281) of the locking means (280a) controlled by a locking command (C),
- a device for blocking (282a) the locking means (280a) in the unlocked position, movable between a blocking position and an unblocking position,
- a device for displacing (22a) the blocking means (282a).

9. The thrust reverser according to claim 7, comprising two movable elements (12a, 12b) in the form of diametrically opposite pivoting doors, wherein the active locking system comprises:
- an active locking means (280a, 280b) of each pivoting door (12a, 12b), movable between a locking position and an unlocking position,
- an actuator (281) of the locking means (280a, 280b) controlled by a locking command (C),
- a means for blocking (282a, 282b) each locking means (280a, 280b) in the unlocked position, movable between a blocking position and an unblocking position,
- a device for displacing (22a, 22b) each blocking means (282a, 282b).

10. The thrust reverser according to the preceding claim, further comprising a system for closing the pivoting doors (12a, 12b) comprising:
- an actuator for closing (15) the doors (12a, 12b) including two first connecting rods (16a, 16b), each first connecting rod being connected to a first lateral edge (120a, 120b) of each door (12a, 12b), said actuator being configured to operate each door at least towards the direct jet position,
- two sliding members (22a, 22b) each carrying a second connecting rod (18a, 18b) connected to the lateral edge (121a, 121b) opposite to the first lateral edge (120a, 120b) of each door, said connecting rods (18a, 18b) being configured to be driven by the doors (12a, 12b) when the closing actuator (15) operates the doors (12a, 12b) towards the direct jet position, so as to displace the sliding members (22a, 22b), and said sliding members forming the devices for displacing (22a, 22b) each blocking means (282a, 282b).

11. The thrust reverser according to the preceding claim, wherein the closing system includes a device for detecting (19) a breakage of a connecting rod.
